# EUROPEAN PATENT APPLICATION

(11) **EP 4 663 442 A1**
(43) Date of publication of application: **17.12.2025**
(21) Application number: 25181483.6
(22) Date of filing: 06.06.2025
(51) Int. Cl.: B60K 1/00

(54) **ELECTRIC VEHICLE**

(30) Priority: 12.06.2024 JP 2024094860
(71) Applicant: TOYOTA JIDOSHA KABUSHIKI KAISHA, Toyota-shi, Aichi-ken 471-8571 (JP)
(72) Inventor: KOIKE, Ryota, TOYOTA-SHI, AICHI-KEN, 471-8571 (JP)
(74) Representative: Cabinet Beau de Loménie

(57) **Abstract**

An electric vehicle (30) includes a first integrated electromechanical unit (37) including a first motor (35) and a first power control device (34), and a second integrated electromechanical unit (41) including a second motor (39) and a second power control device (38). The first integrated electromechanical unit (37) is configured to drive front wheels (31) via first drive shafts (36). The second integrated electromechanical unit (41) is configured to drive rear wheels (32) via second drive shafts (40). A battery (33) is disposed underneath a floor and between the front wheels (31) and the rear wheels (32). The first integrated electromechanical unit (37) is disposed forward of the battery (33). The second integrated electromechanical unit (41) is disposed rearward of the battery (33). The first power control device (34) is disposed rearward of the first motor (35). The second power control device (38) is disposed forward of the second motor (39).

## Description

### BACKGROUND

### 1. Field

The present disclosure relates to an electric vehicle.

### 2. Description of Related Art

Japanese Laid-Open Patent Publication No. 2022-152851 discloses an integrated electromechanical unit in which a power control unit is mounted on an upper surface of a transaxle case. The transaxle case accommodates a motor. The power control unit accommodates an inverter that controls the motor.

The inverter is a relatively heavy device among components mounted on an electric vehicle. The weight distribution in the vehicle influences the handling of the vehicle. Therefore, in order to improve vehicle handling, it is necessary to consider the mounting position of the power control device, including the inverter.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, an electric vehicle is configured to drive drive wheels using power stored in a battery. The electric vehicle includes front wheels and rear wheels that are the drive wheels, a first motor and a second motor configured to drive the drive wheels, a battery configured to store power to be supplied to the first motor and the second motor, a first power control device configured to supply power to the first motor, a second power control device configured to supply power to the second motor, a first integrated electromechanical unit including the first motor and the first power control device, and a second integrated electromechanical unit including the second motor and the second power control device. The first integrated electromechanical unit is configured to drive the front wheels via first drive shafts. The second integrated electromechanical unit is configured to drive the rear wheels via second drive shafts. The battery is disposed underneath a floor and between the front wheels and the rear wheels. The first integrated electromechanical unit is disposed forward of the battery. The second integrated electromechanical unit is disposed rearward of the battery. The first power control device is disposed rearward of the first motor. The second power control device is disposed forward of the second motor.

In another general aspect, an electric vehicle is configured to drive drive wheels using power stored in a battery. The electric vehicle includes front wheels and rear wheels that are the drive wheels, a first motor and a second motor configured to drive the drive wheels, a battery configured to store power to be supplied to the first motor and the second motor, a first power control device configured to supply power to the first motor, a second power control device configured to supply power to the second motor, a first integrated electromechanical unit including the first motor and the first power control device, and a second integrated electromechanical unit including the second motor and the second power control device. The first integrated electromechanical unit is configured to drive the front wheels via first drive shafts. The second integrated electromechanical unit is configured to drive the rear wheels via second drive shafts. The battery is disposed underneath a floor and between the front wheels and the rear wheels. The first integrated electromechanical unit is disposed forward of the battery. The second integrated electromechanical unit is disposed rearward of the battery. The first power control device is disposed rearward of the first drive shafts. The second power control device is disposed forward of the second drive shafts.

Other features and aspects will be apparent from the following detailed description, the drawings, and the claims.

### BRIEF DESCRIPTION OF THE DRAWINGS

Fig. 1 is a schematic diagram showing a configuration of an electric system and a drive system in an electric vehicle according to an embodiment.
Fig. 2 is a schematic diagram showing a configuration of a motor, a planetary gear reduction mechanism, and a differential device in an integrated electromechanical unit shown in Fig. 1.
Fig. 3 is a schematic diagram showing the arrangement of devices in the electric vehicle according to the first embodiment.
Fig. 4 is a cross-sectional view of the electric vehicle taken along line 4-4 in Fig. 3.
Fig. 5 is a schematic diagram showing the arrangement of devices in an electric vehicle according to a second embodiment.
Fig. 6 is a cross-sectional view of the electric vehicle taken along line 6-6 in Fig. 5.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

### First Embodiment

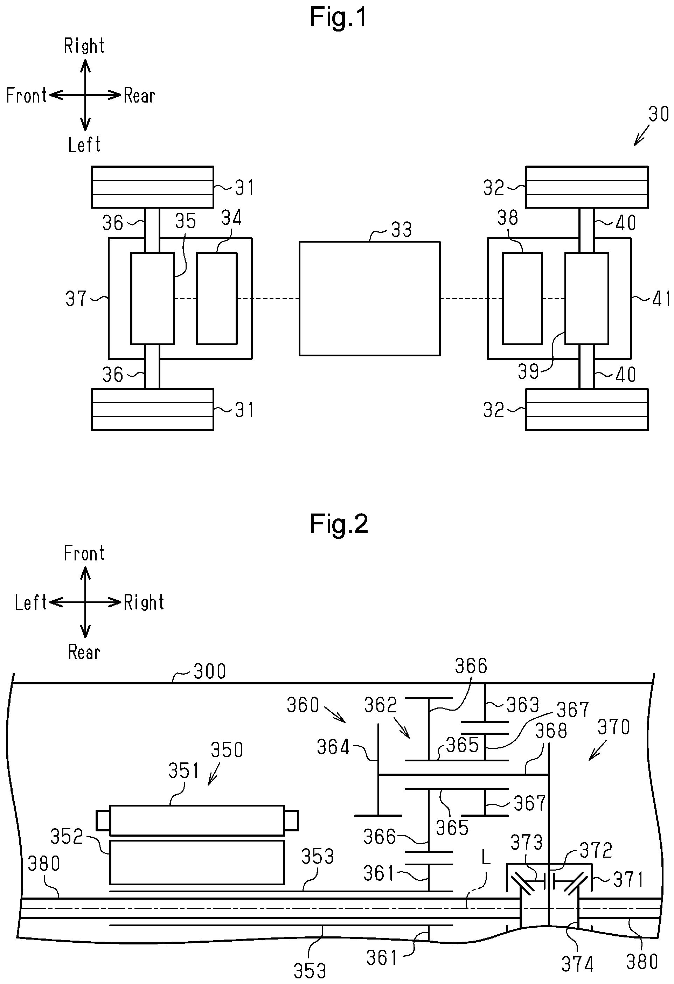

An electric vehicle 30 according to a first embodiment will now be described with reference to Figs. 1 to 4. In the following description, the terms front, rear, left, right, up, and down refer to directions as viewed from the perspective of an occupant facing forward in the electric vehicle 30. The left-right direction corresponds to the vehicle width direction.

### Electric System and the Drive System of the Electric Vehicle 30

As shown in Fig. 1, the electric vehicle 30 includes front wheels 31, rear wheels 32, a battery 33, a first power control device 34, a first motor 35, first drive shafts 36, a second power control device 38, a second motor 39, and second drive shafts 40.

The electric vehicle 30 includes a first motor 35 and a second motor 39, which are power sources for driving drive wheels. The battery 33 stores power to be supplied to the first motor 35 and the second motor 39. The electric vehicle 30 drives the drive wheels using the power stored in the battery 33.

The first motor 35 drives the front wheels 31 via the first drive shafts 36. In other words, the front wheels 31 are drive wheels. The second motor 39 drives the rear wheels 32 via the second drive shafts 40. In other words, the rear wheels 32 are drive wheels.

The first power control device 34 is a power control device that supplies power to the first motor 35. The first motor 35 and the first power control device 34 form a first integrated electromechanical unit 37.

The second power control device 38 is a power control device that supplies power to the second motor 39. The second motor 39 and the second power control device 38 form a second integrated electromechanical unit 41.

The first power control device 34 includes an inverter that converts DC power from the battery 33 into AC power and supplies the AC power to the first motor 35. The second power control device 38 includes an inverter that converts DC power from the battery 33 into AC power and supplies the AC power to the second motor 39.

### Configuration of an Integrated Electromechanical Unit 300 of the First Embodiment

Next, the configuration of the first integrated electromechanical unit 37 and the second integrated electromechanical unit 41 will be described. Fig. 2 is a schematic diagram showing an integrated electromechanical unit 300, which represents a configuration common to the first integrated electromechanical unit 37 and the second integrated electromechanical unit 41 of the first embodiment. As shown in Fig. 2, the integrated electromechanical unit 300 accommodates a motor 350, a planetary gear reduction mechanism 360, and a differential device 370. In other words, each of the first integrated electromechanical unit 37 and the second integrated electromechanical unit 41 accommodates a planetary gear reduction mechanism 360 and a differential device 370. The motor 350 in the integrated electromechanical unit 300 corresponds to the first motor 35 in the first integrated electromechanical unit 37 and the second motor 39 in the second integrated electromechanical unit 41. In the integrated electromechanical unit 300, the motor 350, the planetary gear reduction mechanism 360, and the differential device 370 are disposed so as to overlap with each other when viewed from a side of the electric vehicle 30. Specifically, in the first integrated electromechanical unit 37, the first motor 35, the planetary gear reduction mechanism 360, and the differential device 370 are disposed so as to overlap with each other when viewed from a side of the electric vehicle 30. In the second integrated electromechanical unit 41, the second motor 39, the planetary gear reduction mechanism 360, and the differential device 370 are disposed so as to overlap with each other when viewed from a side of the electric vehicle 30.

The planetary gear reduction mechanism 360 decelerates rotation transmitted from the motor 350 and outputs the rotation. The differential device 370 transmits rotation transmitted from the planetary gear reduction mechanism 360 to the drive wheels via right and left drive shafts 380.

The integrated electromechanical unit 300 includes the planetary gear reduction mechanism 360 to the right of the motor 350. The integrated electromechanical unit 300 includes the differential device 370 to the right of the planetary gear reduction mechanism 360. The integrated electromechanical unit 300 may include the planetary gear reduction mechanism 360 to the left of the motor 350. In that case, the integrated electromechanical unit 300 includes the differential device 370 to the left of the planetary gear reduction mechanism 360.

### Configuration of the Motor 350

The motor 350 includes a stator 351, a rotor 352, and an output shaft 353. The stator 351 is fixed to the case of the integrated electromechanical unit 300. The rotor 352 is rotatable relative to the stator 351. The output shaft 353 is fixed to the rotor 352.

### Configuration of the Planetary Gear Reduction Mechanism 360

The planetary gear reduction mechanism 360 includes a sun gear 361, pinion gears 362, a ring gear 363, and a carrier 364. The sun gear 361 is fixed to the output shaft 353, which protrudes rightward from the motor 350. The sun gear 361 has an annular shape with external teeth. The sun gear 361 rotates integrally with the output shaft 353 about a rotation axis L.

The ring gear 363 is fixed to the case of the integrated electromechanical unit 300. The ring gear 363 has an annular shape with internal teeth. The ring gear 363 is located on the right side of the sun gear 361.

Each pinion gear 362 includes a pinion shaft 365, a large-diameter pinion gear 366, and a small-diameter pinion gear 367. The pinion gear 362 is thus commonly known as a stepped pinion. The large-diameter pinion gear 366 is an external gear fixed to the pinion shaft 365. The large-diameter pinion gear 366 meshes with the sun gear 361. The small-diameter pinion gear 367 is an external gear fixed to a portion of the outer circumferential surface of the pinion shaft 365 to the right of the large-diameter pinion gear 366. The outer diameter of the small-diameter pinion gear 367 is smaller than the outer diameter of the large-diameter pinion gear 366. The small-diameter pinion gear 367 meshes with the ring gear 363. The planetary gear reduction mechanism 360 includes three pinion gears 362. In Fig. 2, only one representative pinion gear 362 is illustrated.

The pinion shafts 365 of the pinion gears 362 are rotatably supported by the carrier 364. Specifically, support shafts 368 of the carrier 364 extend through the centers of the respective pinion shafts 365. The pinion shafts 365 are supported by the support shafts 368. The carrier 364 is has the shape of a disc. The pinion gears 362 are rotatable relative to the carrier 364. In other words, each pinion gear 362 is rotatable.

The integrated electromechanical unit 300 rotatably supports the carrier 364. In other words, the carrier 364 is rotatable relative to the case of the integrated electromechanical unit 300. The pinion gears 362 are capable of orbiting around the sun gear 361. The carrier 364 is capable of rotating coaxially with the sun gear 361 in accordance with the orbital movement of the pinion gears 362. That is, the carrier 364 rotates about the rotation axis L.

### Configuration of the Differential Device 370

The differential device 370 includes a differential case 371, a differential pinion shaft 372, two differential pinion gears 373, and two differential side gears 374. The differential case 371 is integrated with the carrier 364. The differential pinion shaft 372 is provided inside the differential case 371. The differential pinion shaft 372 is orthogonal to the rotation axis L. The differential pinion shaft 372 extends through the differential pinion gears 373. The differential pinion gears 373 respectively mesh with the differential side gears 374. The right differential side gear 374 is connected to the right drive shaft 380. The left differential side gear 374 is connected to the left drive shaft 380.

When the carrier 364 rotates about the rotation axis L, the differential case 371 rotates about the rotation axis L. The rotation of the differential case 371 about the rotation axis L is transmitted to the right and left drive shafts 380 via the differential pinion shaft 372, the differential pinion gears 373, and the differential side gears 374, so that the right and left drive shafts 380 rotate about the rotation axis L. The above-described gears allow the differential device 370 to generate a difference between the rotation speeds of the right and left drive shafts 380. The left drive shaft 380 extends through the output shaft 353. In other words, the output shaft 353 and the drive shafts 380 are disposed so as to overlap with each other when viewed from the side of the electric vehicle 30. The drive shafts 380 are rotatable relative to the output shaft 353.

### Internal Structure of the Electric Vehicle 30 of the First Embodiment

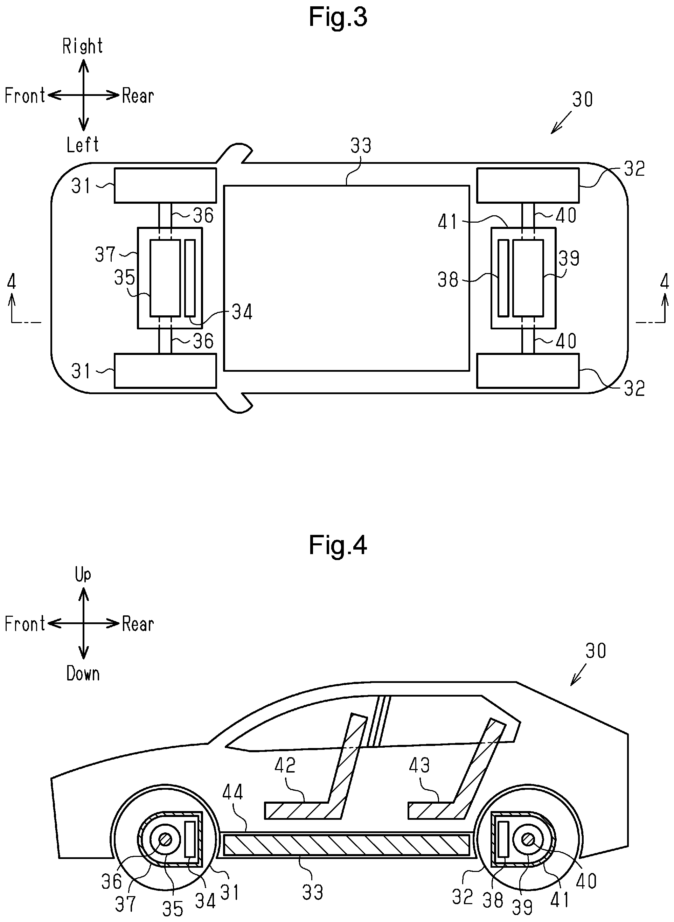

Fig. 3 schematically shows the arrangement of devices in a top view of the electric vehicle 30 according to the first embodiment.

In the electric vehicle 30, the first integrated electromechanical unit 37 is disposed forward of the battery 33. In the electric vehicle 30, the second integrated electromechanical unit 41 is disposed rearward of the battery 33. That is, the electric vehicle 30 includes two integrated electromechanical units 300. In the electric vehicle 30, the battery 33 is disposed between the first integrated electromechanical unit 37 and the second integrated electromechanical unit 41.

The first integrated electromechanical unit 37 drives the front wheels 31 via the first drive shafts 36. The second integrated electromechanical units 41 drives the rear wheels 32 via the second drive shafts 40.

The first power control device 34, which forms part of the first integrated electromechanical unit 37, is disposed rearward of the first motor 35. The first power control device 34 is disposed rearward of the first drive shafts 36. The second power control device 38, which forms part of the second integrated electromechanical unit 41, is disposed forward of the second motor 39. The second power control device 38 is disposed forward of the second drive shafts 40.

### Cross-Sectional View of the Electric Vehicle 30 of the First Embodiment as Viewed from the Side

Fig. 4 is a schematic cross-sectional view of the electric vehicle 30 taken along line 4-4 in Fig. 3. As shown in Fig. 4, the electric vehicle 30 includes first-row seats 42 and second-row seats 43 on a floor 44. The second-row seats 43 are disposed rearward of the first-row seats 42. The battery 33 is disposed underneath the floor 44 and between the front wheels 31 and the rear wheels 32.

The first power control device 34 is disposed inside the perimeter of the front wheels 31 when viewed from the side of the electric vehicle 30. The second power control device 38 is disposed inside the perimeter of the rear wheels 32 when viewed from the side of the electric vehicle 30.

### Operation of the First Embodiment

When multiple components are mounted at positions farther from the center of gravity of a vehicle, and their mass is distributed relatively away from the center of gravity of the vehicle, the responsiveness of the vehicle during turning decreases. In contrast, when multiple components are mounted closer to the center of gravity of the vehicle, and their mass is relatively concentrated near the center of gravity of the vehicle, the responsiveness of the vehicle during turning improves.

The battery 33, the first power control device 34, and the second power control device 38 are relatively heavy among the components mounted on the electric vehicle 30. In the electric vehicle 30, the battery 33, the first power control device 34, and the second power control device 38 are arranged between the first motor 35 and the first drive shaft 36, which drive front wheels 31, and the second motor 39 and the second drive shafts 40, which drive the rear wheels 32. That is, the first power control device 34 and the second power control device 38, which are relatively heavy, are disposed closer to the center of the electric vehicle 30. As a result, in the electric vehicle 30, the first power control device 34 and the second power control device 38, which are relatively heavy, are brought closer to the center of gravity of the electric vehicle 30.

### Advantages of the First Embodiment

(1-1) In the electric vehicle 30, the first power control device 34, which is relatively heavy, is disposed closer to the center of gravity of the electric vehicle 30 than the first motor 35 and the first drive shafts 36 are. In the electric vehicle 30, the second power control device 38, which is relatively heavy, is disposed closer to the center of gravity of the electric vehicle 30 than the second motor 39 and the second drive shafts 40 are. As a result, the electric vehicle 30 exhibits high responsiveness during turning.
(1-2) In the first integrated electromechanical unit 37, the output shaft of the first motor 35 and the first drive shafts 36 are disposed so as to overlap with each other when viewed from the side of the electric vehicle 30. In the second integrated electromechanical unit 41, the output shaft of the second motor 39 and the second drive shafts 40 are disposed so as to overlap with each other when viewed from the side of the electric vehicle 30. Therefore, the first integrated electromechanical unit 37 and the second integrated electromechanical unit 41 are reduced in size in the longitudinal direction of the electric vehicle 30 as compared with an integrated electromechanical unit in which the output shaft of the motor and the drive shafts of the drive wheels do not overlap with each other when viewed from the side of the electric vehicle 30. Thus, even when the first power control device 34 and the second power control device 38 are disposed closer to the center of the electric vehicle 30, the electric vehicle 30 ensures sufficient space between the front wheels 31 and rear wheels 32 for installing the battery 33. Accordingly, the electric vehicle 30 achieves both high responsiveness during turning and sufficient space for installation of the battery 33.

### Second Embodiment

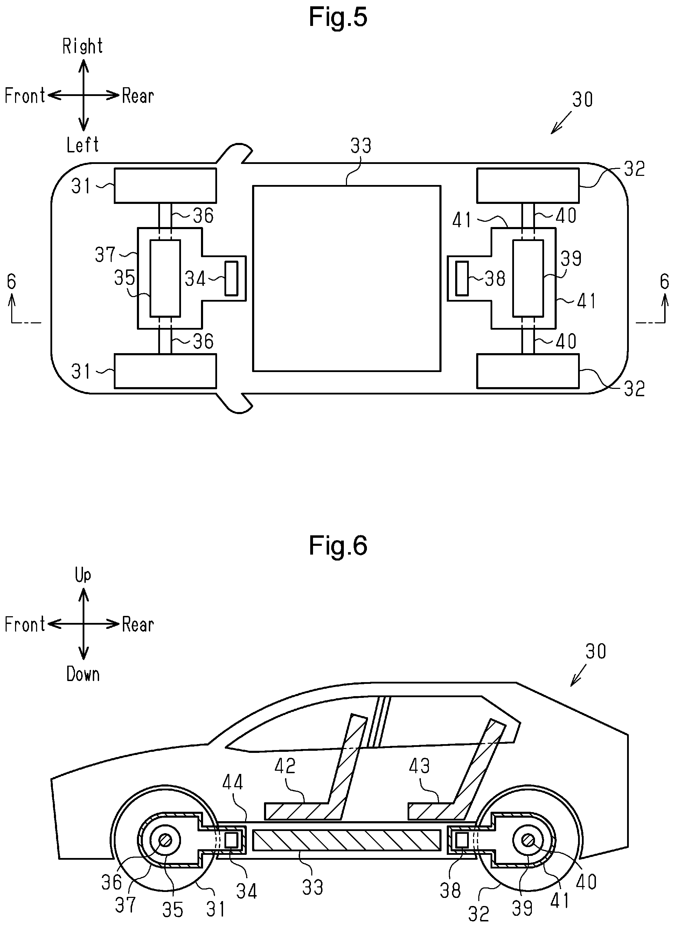

A second embodiment will now be described with reference to Figs. 5 and 6. The second embodiment will be described, focusing on the differences from the first embodiment.

### Internal Structure of the Electric Vehicle 30 of the Second Embodiment

Fig. 5 schematically shows the arrangement of devices in a top view of the electric vehicle 30 according to the second embodiment. In the electric vehicle 30, the first integrated electromechanical unit 37 is disposed forward of the battery 33. In the electric vehicle 30, the second integrated electromechanical unit 41 is disposed rearward of the battery 33. The first integrated electromechanical unit 37 drives the front wheels 31 via the first drive shafts 36. The second integrated electromechanical units 41 drives the rear wheels 32 via the second drive shafts 40.

The first power control device 34, which forms part of the first integrated electromechanical unit 37, is disposed rearward of the first motor 35. The first power control device 34 is disposed rearward of the first drive shafts 36. The first power control device 34 is disposed rearward of the front wheels 31.

The second power control device 38, which forms part of the second integrated electromechanical unit 41, is disposed forward of the second motor 39. The second power control device 38 is disposed forward of the second drive shafts 40. The second power control device 38 is disposed forward of the rear wheels 32.

### Cross-Sectional View of the Electric Vehicle 30 of the Second Embodiment as Viewed from the Side

Fig. 6 is a schematic cross-sectional view of the electric vehicle 30 taken along line 6-6 in Fig. 5. As shown in Fig. 6, the electric vehicle 30 includes first-row seats 42 and second-row seats 43 on a floor 44. The second-row seats 43 are disposed rearward of the first-row seats 42. The battery 33 is disposed underneath the floor 44 and between the front wheels 31 and the rear wheels 32.

The first power control device 34 is disposed outside the perimeter of the front wheels 31 when viewed from the side of the electric vehicle 30. The second power control device 38 is disposed outside the perimeter of the rear wheels 32 when viewed from the side of the electric vehicle 30.

### Operation of the Second Embodiment

In the electric vehicle 30, the first power control device 34 is disposed rearward of the front wheels 31. Therefore, the first power control device 34, which is relatively heavy, is disposed closer to the center of the electric vehicle 30 than in a vehicle in which the first power control device 34 is disposed inside the perimeter of the front wheels 31 when viewed from the side of the vehicle.

In the electric vehicle 30, the second power control device 38 is disposed forward of the rear wheels 32. Therefore, the second power control device 38, which is relatively heavy, is disposed closer to the center of the electric vehicle 30 than in a vehicle in which the second power control device 38 is disposed inside the perimeter of the rear wheels 32 when viewed from the side of the vehicle.

### Advantages of the Second Embodiment

(2-1) The first power control device 34, which is relatively heavy, is disposed closer to the center of gravity of the electric vehicle 30 than the front wheels 31 are. The second power control device 38, which is relatively heavy, is disposed closer to the center of gravity of the electric vehicle 30 than the rear wheels 32 are. As a result, the electric vehicle 30 exhibits high responsiveness during turning.

### Modifications

The following are modifications commonly applicable to the above-described embodiments. The following modifications can be combined as long as the combined modifications remain technically consistent with each other.

In the first embodiment, both the first power control device 34 and the second power control device 38 are disposed inside the perimeter of the wheels when viewed from the side of the electric vehicle 30. In the second embodiment, both the first power control device 34 and the second power control device 38 are disposed outside the perimeter of the wheels when viewed from the side of the electric vehicle 30. Whether each of the first power control device 34 and the second power control device 38 is disposed outside the perimeter of the wheels or inside the perimeter of the wheels may be appropriately changed. It is acceptable as long as the first power control device 34 is disposed rearward of the first motor 35 or the first drive shafts 36, and the second power control device 38 is disposed forward of the second motor 39 or the second drive shafts 40. For example, the first power control device 34 may be disposed inside the perimeter of the front wheels 31 when viewed from the side of the electric vehicle 30, and the second power control device 38 may be disposed outside the perimeter of the rear wheels 32 when viewed from the side of the electric vehicle 30. The first power control device 34 may be disposed outside the perimeter of the front wheels 31 when viewed from the side of the electric vehicle 30, and the second power control device 38 may be disposed inside the perimeter of the rear wheels 32 when viewed from the side of the electric vehicle 30.

In the integrated electromechanical unit 300 mounted on the electric vehicle 30, the drive shaft 380 does not necessarily need to extend through the inside of the output shaft 353 of the motor 350. In other words, in the integrated electromechanical unit 300 mounted on the electric vehicle 30, the motor 350, the planetary gear reduction mechanism 360, and the differential device 370 do not necessarily need to be disposed so as to overlap with each other when viewed from a side of the electric vehicle 30.

In the electric vehicle 30, the first power control device 34 may be disposed forward of the first drive shafts 36 as long as the first power control device 34 is disposed rearward of the first motor 35 and the second power control device 38 is disposed forward of the second motor 39. That is, the first motor 35, the first power control device 34, and the first drive shaft 36 may be disposed in that order from the front of the electric vehicle 30. Even in this case, the first power control device 34, which is relatively heavy, is disposed closer to the center of gravity of the electric vehicle 30 as compared with a case in which the first power control device 34 is disposed forward of the first motor 35 and the first drive shaft 36. As a result, the electric vehicle 30 exhibits high responsiveness during turning.

In the electric vehicle 30, the second power control device 38 may be disposed rearward of the second drive shafts 40 as long as the first power control device 34 is disposed rearward of the first motor 35 and the second power control device 38 is disposed forward of the second motor 39. That is, the second drive shafts 40, the second power control device 38, and the second motor 39 may be disposed in that order from the front of the electric vehicle 30. Even in this case, the second power control device 38, which is relatively heavy, is disposed closer to the center of gravity of the electric vehicle 30 than in a case in which the second power control device 38 is disposed rearward of the second motor 39 and the second drive shafts 40. As a result, the electric vehicle 30 exhibits high responsiveness during turning.

In the electric vehicle 30, the first power control device 34 may be disposed forward of the first motor 35 as long as the first power control device 34 is disposed rearward of the first drive shafts 36 and the second power control device 38 is disposed forward of the second drive shafts 40. That is, the first drive shafts 36, the first power control device 34, and the first motor 35 may be disposed in that order from the front of the electric vehicle 30. Even in this case, the first power control device 34, which is relatively heavy, is disposed closer to the center of gravity of the electric vehicle 30 as compared with a case in which the first power control device 34 is disposed forward of the first motor 35 and the first drive shaft 36. As a result, the electric vehicle 30 exhibits high responsiveness during turning.

In the electric vehicle 30, the second power control device 38 may be disposed rearward of the second motor 39 as long as the first power control device 34 is disposed rearward of the first drive shafts 36 and the second power control device 38 is disposed forward of the second drive shafts 40. That is, the second motor 39, the second power control device 38, and the second drive shafts 40 may be disposed in that order from the front of the electric vehicle 30. Even in this case, the second power control device 38, which is relatively heavy, is disposed closer to the center of gravity of the electric vehicle 30 than in a case in which the second power control device 38 is disposed rearward of the second motor 39 and the second drive shafts 40. As a result, the electric vehicle 30 exhibits high responsiveness during turning.

The first integrated electromechanical unit 37 may include a device other than an inverter as the first power control device 34. Similarly, the second integrated electromechanical unit 41 may include a device other than an inverter as the second power control device 38. For example, the first integrated electromechanical unit 37 may include a DC-DC converter that boosts the DC power supplied from the battery 33, in addition to the inverter. In this case, the inverter provided as the first power control device 34 converts the DC power supplied from the DC-DC converter into AC power and supplies the AC power to the first motor 35. The first integrated electromechanical unit 37 may include, as a power control device, a first motor electronic control unit (ECU) that controls the power supplied to the first motor 35. Similarly, the second integrated electromechanical unit 41 may include, as a power control device, a second motor ECU that controls the power supplied to the second motor 39. Either the first integrated electromechanical unit 37 or the second integrated electromechanical unit 41 may include a battery ECU that controls the power of the battery 33, or an integrated ECU that communicate with multiple ECUs to controls other ECUs. Each ECU includes a CPU and a memory that stores control programs and data. Each ECU executes various control processes by causing the CPU to execute the programs stored in the memory.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuitry are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. An electric vehicle (30) configured to drive drive wheels using power stored in a battery (33), the electric vehicle (30) comprising:
front wheels (31) and rear wheels (32) that are the drive wheels;
a first motor (35) and a second motor (39) configured to drive the drive wheels;
a battery (33) configured to store power to be supplied to the first motor (35) and the second motor (39);
a first power control device (34) configured to supply power to the first motor (35);
a second power control device (38) configured to supply power to the second motor (39);
a first integrated electromechanical unit (37) including the first motor (35) and the first power control device (34); and
a second integrated electromechanical unit (41) including the second motor (39) and the second power control device (38), wherein
the first integrated electromechanical unit (37) is configured to drive the front wheels (31) via first drive shafts (36),
the second integrated electromechanical unit (41) is configured to drive the rear wheels (32) via second drive shafts (40),
the battery (33) is disposed underneath a floor (44) and between the front wheels (31) and the rear wheels (32),
the first integrated electromechanical unit (37) is disposed forward of the battery (33),
the second integrated electromechanical unit (41) is disposed rearward of the battery (33),
the first power control device (34) is disposed rearward of the first motor (35), and
the second power control device (38) is disposed forward of the second motor (39).

2. An electric vehicle (30) configured to drive drive wheels using power stored in a battery (33), the electric vehicle (30) comprising:
front wheels (31) and rear wheels (32) that are the drive wheels;
a first motor (35) and a second motor (39) configured to drive the drive wheels;
a battery (33) configured to store power to be supplied to the first motor (35) and the second motor (39);
a first power control device (34) configured to supply power to the first motor (35);
a second power control device (38) configured to supply power to the second motor (39);
a first integrated electromechanical unit (37) including the first motor (35) and the first power control device (34); and
a second integrated electromechanical unit (41) including the second motor (39) and the second power control device (38), wherein
the first integrated electromechanical unit (37) is configured to drive the front wheels (31) via first drive shafts (36),
the second integrated electromechanical unit (41) is configured to drive the rear wheels (32) via second drive shafts (40),
the battery (33) is disposed underneath a floor (44) and between the front wheels (31) and the rear wheels (32),
the first integrated electromechanical unit (37) is disposed forward of the battery (33),
the second integrated electromechanical unit (41) is disposed rearward of the battery (33),
the first power control device (34) is disposed rearward of the first drive shafts (36), and
the second power control device (38) is disposed forward of the second drive shafts (40).

3. The electric vehicle (30) according to claim 1, wherein
the first power control device (34) is disposed rearward of the first drive shafts (36), and
the second power control device (38) is disposed forward of the second drive shafts (40).

4. The electric vehicle (30) according to claim 3, wherein
at least one of the first integrated electromechanical unit (37) or the second integrated electromechanical unit (41) includes:
a planetary gear reduction mechanism (360) configured to decelerate rotation transmitted from the motor (35, 39, 350) and output the rotation; and
a differential device (370) configured to transmit rotation transmitted from the planetary gear reduction mechanism (360) to the drive wheels (31, 32) via the right and left drive shafts (36, 40, 380),
the planetary gear reduction mechanism (360) includes:
a sun gear (361) provided on an output shaft (353) of the motor (35, 39, 350);
multiple pinion gears (362) meshing with the sun gear (361) and configured to orbit around a rotation axis (L) of the sun gear (361);
a ring gear (363) meshing with the pinion gears (362); and
a carrier (364) configured supporting the pinion gears (362) to allow the pinion gears (362) to rotate, the carrier (364) being configured to rotate coaxially with the sun gear (361) in accordance with orbital movement of the pinion gears (362),
the differential device (370) includes:
a differential case (371) integrated with the carrier (364);
a differential pinion shaft (372) provided in the differential case (371) and orthogonal to the rotation axis (L) of the sun gear (361);
multiple differential pinion gears (373) through which the differential pinion shaft (372) extends; and
multiple differential side gears (374) meshing with the differential pinion gears (373) and connected to the drive shafts (36, 40, 380),
the drive shafts (36, 40, 380) are configured to rotate when rotation of the differential case (371) associated with rotation of the carrier (364) is transmitted to the drive shafts (36, 40, 380) via the differential pinion shaft (372), the differential pinion gears (373), and the differential side gears (374),
the motor (35, 39, 350), the carrier (364), the differential case (371), and the drive shafts (36, 40, 380) are configured to rotate about the rotation axis (L) of the sun gear (361),
one of the right and left drive shafts (36, 40, 380) extends through the output shaft (353), and
the motor (35, 39, 350), the planetary gear reduction mechanism (360), and the differential device (370) are disposed so as to overlap with each other when viewed from a side of the electric vehicle (30).

5. The electric vehicle (30) according to any one of claims 1 to 4, wherein at least one of the first power control device (34) and the second power control device (38) is disposed outside a perimeter of the front wheels (31) or the rear wheels (32) when viewed from a side of the electric vehicle (30).
